# EUROPEAN PATENT SPECIFICATION

(11) **EP 2 815 590 B1**
(45) Date of publication and mention of the grant of the patent: **21.12.2016**
(21) Application number: 13717059.3
(22) Date of filing: 13.02.2013
(51) Int. Cl.: H04W 4/00, H04W 8/04, H04W 8/18, H04W 12/06, H04W 48/16

(54) **M2M SERVICE ENABLEMENT OVER ACCESS NETWORKS**
M2M-DIENSTAKTIVIERUNG ÜBER ZUGANGSNETZE
ACTIVATION DE SERVICES M2M SUR DES RÉSEAUX D'ACCÈS

(30) Priority: 13.02.2012 US 201261598161 P
(43) Date of publication of application: 24.12.2014
(73) Proprietor: Telefonaktiebolaget LM Ericsson (publ), 164 83 Stockholm (SE)
(72) Inventor: FOTI, George, Dollard des Ormeaux, Québec H9G 2Z8 (CA); MUHANNA, Ahmad, Richardson, Texas 75082 (US)
(74) Representative: Röthinger, Rainer
(86) International application number: PCT/IB2013/051177
(87) International publication number: WO 2013/121362

(56) References cited:
- WO-A1-2011/112683
- WO-A1-2012/013401
- WO-A2-2009/103623
- US-A1- 2011 268 047
- "Machine-to-Machine communications (M2M); Functional architecture", ETSI DRAFT; 00002ED211V201, EUROPEAN TELECOMMUNICATIONS STANDARDS INSTITUTE (ETSI), 650, ROUTE DES LUCIOLES ; F-06921 SOPHIA-ANTIPOLIS ; FRANCE, no. V2.0.1, 6 January 2012 (2012-01-06), pages 1-283, XP014068763, [retrieved on 2012-01-06]
- 3GPP: "3rd Generation Partnership Project; Technical Specification Group Services and System Aspects; System Improvements for Machine-Type Communications; (Release 11)", 3GPP DRAFT; 23888-160-RM, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 2 December 2011 (2011-12-02), XP050575133, [retrieved on 2011-12-02]
- ERICSSON ET AL: "Mapping aspects for ETSI M2M architecture", 3GPP DRAFT; S2-112291_SIMTC_PCR_ETSI_M2M_MAPPING_V2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Xi'An; 20110516, 11 May 2011 (2011-05-11), XP050525316, [retrieved on 2011-05-11]
- MUHANNA A ET AL: "Proposal: 3GPP2 Supporting ETSI M2M Architecture", 3RD GENERATION PARTNERSHIP PROJECT 2 , 3GPP2, 3GPP2 TSG-X, WG5 (PDS) , 29 March 2011 (2011-03-29), pages 1-10, XP002687319, Retrieved from the Internet: URL:ftp://ftp.3gpp2.org/TSGX/Working/2011/ 2011-03-Seoul/WG5-PDS/X50-20110328-028__Er icsson_3GPP2_M2M_Architecture_Adaptation.p df [retrieved on 2012-11-16]
- "3rd Generation Partnership Project; Technical Specification Group Services and System Aspects; Feasibility Study on the Security Aspects of Remote Provisioning and Change of Subscription for M2M Equipment; (Release 9)", 3GPP STANDARD; 3GPP TR 33.812, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V2.1.0, 20 December 2009 (2009-12-20), pages 1-96, XP050401490, [retrieved on 2009-12-20]

## Description

### TECHNICAL FIELD

This disclosure relates generally to enablement of Machine-to-Machine service in mobile networks.

### BACKGROUND

Machine to Machine (M2M) devices and M2M service providers (M2M SPs) are beginning to proliferate. This is enabling a so-called Internet of connected things that makes available services and insights not previously possible. As the number of devices and interconnections increases so do both the number of problems associated with managing the devices, and the business opportunities for the M2M SPs and the Access Network (AN) operators.

Whether they are mobile, such as sensors in transportation systems, or fixed in locations such as on a utility meter, devices are being connected to each other and to network services. However, a problem has arisen in that as the number of devices increases the problems of managing the devices also grows. Furthermore, the manner in which devices connect to a network can affect how they are managed.

As there is a great demand for connected devices to be able to make use of a cellular data network and not just a wireless network interface such as WiFi (IEEE 802.11), another problem is raised in how these devices will be registered and configured for access to different access network providers as well as M2M service providers. The Access Network provider may be a Service Provider, but in other scenarios they may only have a business relationship.

M2M devices are becoming more commonplace, and there is increasing standardization in the manner in which the M2M devices will communicate with M2M SPs over ANs. This is enabling the proliferation of both M2M SPs and M2M devices that are directly sold to end users. These devices may not be pre-provisioned for service with a particular M2M SP. Even when the devices are pre-provisioned for service with an M2M SP, the AN doesn't know how the M2M SP wants the device configured on the access network, how the M2M SP wants access rights restricted to control traffic, or how to configure billing arrangements. This information must be obtained for proper functioning, but often cannot be obtained from the device.

Therefore, it would be desirable to provide a system and method that obviate or mitigate the above described problems.

Document WO 2009/103623 A2 may be construed to disclose a system and methods for associating a 'generic' wireless device, i.e., a device that is not preprogrammed with subscription credentials corresponding to a particular operator, with a Home Operator designated by the device's owner. The system and methods further facilitate the automatic linking of a newly activated M2M device to an appropriate server for downloading the subscription credentials for the Home Operator. The system includes a registration server for maintaining electronic registration data for a plurality of wireless devices and for directing newly activated wireless devices to a server for downloading 'permanent' subscription credentials, such as a downloadable USIM. The system further includes a subscription server for updating registration server entries to reflect an association between a first wireless device and its corresponding home network. Further, the subscription server may be further configured for downloading subscription credentials to subscribing wireless devices.

Document US 2011/268047 A1 may be construed to disclose a method, system, and computer program product for allocating a plurality of subscriptions to wireless services in a network among a plurality of wireless devices in the network. The method aspect comprises creating a group including a plurality of wireless devices, making an initial allocation of the subscriptions to the group, the initial allocation including allocating one subscription to each of some of the plurality of wireless devices, modifying the allocation of the subscriptions to the group, including at least one of de-allocating a subscription from one of the plurality of wireless devices and allocating a subscription to one of the plurality of wireless devices.

Document WO 2011/112683 A1 may be construed to disclose a method and apparatus for supporting machine-to-machine (M2M) communications in a hierarchical network architecture including an M2M gateway. An M2M entity, (such as M2M device, M2M gateway, or M2M network entity), may perform a service capability discovery procedure to discover an M2M service capability entity that may provide an M2M service capability, and register with the discovered M2M service capability entity. The address or identity of the service capability entity may be pre-configured or obtained from the dispatcher server. The M2M entity may indicate a support M2M service identifier and receive an identity or address of the M2M service capability entity mapping the service identifier. The gateway may advertise M2M service identifiers supported by the gateway so that the M2M device may access the gateway if there is a match. The address of M2M service capability entities may be obtained from the core network.

Document "Machine-to-Machine communications (M2M); Functional architecture", ETSI draft V2.0.1 may be construed to disclose the overall end to end M2M functional architecture, including description of the functional entities, the related reference points and the service capabilities; M2M identifiers, information model; procedures for bootstrapping, security, and management, charging and implementation guidance. The M2M functional architecture is designed to make use of an IP capable underlying network including the IP network service provided by 3GPP, TISPAN and 3GPP2 compliant systems. Non-IP data services are used in the context of that document for the purpose of out of band communication.

Document WO 2012/013401 A1 may be construed to disclose an apparatus configured to operate as a subscriber server. The apparatus comprises a memory for storing the subscription information of one or more Machine Type Communications, MTC, subscribers, the subscription information of a MTC subscriber including one or more MTC Features and information regarding the MTC subscriber's subscribed services, a processor for assessing which of the one or more subscribed MTC Features are supported, assessing any interaction that may occur between each of the supported subscribed MTC Features and between each of the supported subscribed MTC Features and the subscribed services, and determining the subscription information that should be sent to a serving node based on the outcome of the assessments, and a transmitter for sending the determined subscription information to the serving node.

Document "3rd Generation Partnership Project; Technical Specification Group Services and System Aspects; System Improvements for Machine-Type Communications; (Release 11)", 3GPP draft, may be construed to disclose architectural aspects of the System Improvements for Machine Type Communications requirements specified in TS 22.368. Specifically, the following system improvements are considered: Architectural enhancements to support a large number of Machine-Type Communication (MTC) devices in the network; Architectural enhancements to fulfil MTC service requirements; and Support combinations of architectural enhancements for MTC, though not all combinations may by possible.

Document "Mapping aspects for ETSI M2M architecture", 3GPP draft S2-112291, may be construed to disclose techniques for ensuring 3GPP network architecture being a viable communication/transport network alternative for all M2M services; identifying main aspects of ETSI M2M architecture that need to be considered by 3GPP access networks architecture; identifying entities and interfaces that are required for 3GPP networks to support M2M services in-line with ETSI M2M Service Layer (SL) architecture; and identifying 3GPP areas that need to be addressed to enable 3GPP access networks to support ETSI M2M SL Architecture.

Document "Proposal: 3GPP2 Supporting ETSI M2M Architecture", Muhanna A. et.al., may be construed to disclose techniques for ensuring cdma2000 network architecture being a viable communication network alternative for all M2M services; identifying main aspects of ETSI M2M architecture that need to be considered by 3GPP2 access networks architecture; identifying entities and interfaces that are required for 3GPP2 cdma2000 networks to support M2M services in-line with ETSI M2M architecture; ensuring that 3GPP2 cdma2000 access network can be used to offer M2M services to any M2M services; and identifying 3GPP2 areas that need to be addressed to enable 3GPP2 access networks to support ETS M2M Architecture.

Document 3GPP TR 33.812 V2.1.0 may be construed to disclose techniques for remote subscription management for M2M Equipment (M2ME) when the Machine Communications Identity Module (MCIM) application resides in the UICC and when the MCIM application resides in the M2M equipment. The remote subscription management includes tasks such as remote subscription provisioning and/or remote change of subscription. The content of the document includes the definition of a trust model for remote subscription management for M2ME. Security threats and security requirements are identified, and an evaluation of the candidate solutions is presented.

### SUMMARY

It is an object of the present invention to obviate or mitigate at least one disadvantage of the prior art.

There are provided methods and apparatuses according to the independent claims. Developments are set forth in the dependent claims.

There may be provided a method of subscription configuration at a network service control layer entity in an access network. The method may comprise the steps of receiving, from a device connected to the access network, a registration request containing a subscription identifier; determining, in accordance with the received registration request, a service provider associated with the device; transmitting, on behalf of the device, a registration request to a determined service provider; and modifying a subscription configuration associated with the device in the access network in accordance with a received response to the transmitted registration request.

The step of receiving may include receiving a request over a bearer in the access network having the network service control layer entity defined as the access point name (APN). The subscription identifier may be a machine to machine subscription identifier and the step of determining may include extracting a service provider identity from the machine to machine subscription identity. The transmitted registration request may be created in accordance with the received registration request. The step of transmitting may include transmitting an external identifier to the determined service provider, the external identifier being uniquely allocated to the subscription associated with the device and the service provider associated with the subscription. The step of modifying may include modifying a subscription profile stored at a Home Subscriber Server. The step of modifying may include modifying a subscription policy profile. The step of modifying may include modifying the subscription configuration in the access network in accordance with a Service Level Agreement associated with the determined service provider. The step of modifying may include restricting available network access rights associated with the device. The device may be a Machine-to-Machine terminal device, and the service provider may be a Machine-to-Machine service provider.

There may be provided an access network Machine-to-Machine service control layer entity comprising a network interface, a processor and an instruction repository. The network interface can be used to communicate with a connected machine-to-machine device and a machine-to-machine service provider. The processor may execute stored instructions. The instruction repository may store instructions that when executed cause the processor to receive, over the network interface, a registration request containing a subscription identifier from the machine-to-machine device, determine that the received registration request is associated with the machine-to-machine service provider; transmit a registration request to the service provider on behalf of the device over the network interface, and modify a subscription configuration associated with the device in the access network in accordance with a response to the transmitted registration request received over the network interface.

There may be provided a method of proxying communications between a machine-to-machine device connected to an access network and a machine-to-machine service provider, at a network service control layer entity in the access network. The method may comprise the steps of receiving a data transmission from the device containing a subscription identifier; selecting the machine-to-machine service provider from a plurality of machine-to-machine-service providers; upon determining that the selected machine-to-machine service provider does not make use of an interworking function, creating a binding uniquely associating the device with the data transmission and selected machine-to-machine service provider; transmitting, to the selected service provider, a message determined in accordance with the received data transmission; receiving a response to the transmitted message; and transmitting to the device uniquely associated with the received response by the created binding, a response to the received data transmission.

The step of selecting the service provider may include selecting the service provider in accordance with the subscription identifier. The step of selecting the service provider may include selecting the service provider in accordance with access network subscription information associated with the device. The step of creating a binding may include associating an external identifier assigned to the device.

There may be provided an access network Machine-to-Machine service control layer entity comprising a network interface, a processor and an instruction repository. The network interface may allow for communication with a connected machine-to-machine device and a machine-to-machine service provider. The processor may execute instructions stored in the instruction repository, and the instruction repository may store instructions that when executed cause to processor to select the machine-to-machine service provider in accordance with a subscription identifier contained in a data transmission received over the network interface from the machine-to-machine device, create a binding uniquely associating the device with the data transmission and the selected machine-to-machine device upon determining that the selected machine-to-machine service provider does not make use of an interworking function, transmit to the selected service provider a message determined in accordance with the received data transmission, transmit a response to the received data transmission determined in accordance with a response received over the network interface from the service provider, the transmitted response sent over the network interface and sent to the device.

There may be provided a method for obtaining network configuration parameters at a machine-to-machine device. The method may comprise the steps of connecting to an access network; receiving temporary access network configuration parameters in response to the connection; registering with a machine-to-machine service provider over the access network using the received temporary access network configuration parameters; receiving a response to the registration with the machine-to-machine service provider; and setting permanent access network configuration parameters in accordance with the received response.

The method may further comprise the step of selecting the machine-to-machine service provider from a list provided by the access network prior to the step of registering. The access network may be a radio access network. The temporary access network configuration parameters may include an access point name, APN, specifying a node in the access network, and optionally the permanent access network configuration parameters include an APN specifying a node associated with the service provider, or the APN can specify a node in the access network.

There may be provided a machine to machine device. The device may comprise a network interface, a processor and an instruction repository. The network interface may allow for communication with an access network. The processor may execute instructions. The instruction repository may store instructions that when executed by the processor cause the processor to initiate a connection to the access network over the network interface, register with a machine-to-machine service provider through the access network using temporary access network configuration parameters received in response to the initiated connection, and to set permanent access network configuration parameters in accordance with a registration response received in response to the registration with the machine-to-machine service provider.

There may be provided a method of configuring a machine-to-machine device for use of an access network. The method may comprise the steps of receiving an initial attach from the device; transmitting temporary configuration parameters to the device; receiving a registration request from the device for service with a machine-to-machine service provider; transmitting a registration request to the service provider on behalf of the device; receiving a registration response from the service provider; and transmitting permanent access network configuration parameters, determined in accordance with the received registration response, to the device.

The temporary configuration parameters may be selected to provide limited access to network resources which can optionally provide the device with proxied access to the service provider through a node in the access network. The method may further include the step of receiving, from the device, an explicit selection of the machine-to-machine service provider in response to transmitting a list of available machine-to-machine service providers to the device. The registration request transmitted to the service provider may be generated in accordance with the received registration request. The temporary access network configuration parameters may include an access point name, APN, specifying a node in the access network. The permanent access network configuration parameters may include an APN specifying a node associated with the service provider. The permanent access network configuration parameters include an APN specifying a node in the access network.

There may be provided an access network machine-to-machine network service control layer entity. The entity may comprise a network interface, a processor and an instruction repository. The network interface may allow for communication with devices and service providers connected to an access network. The processor may execute instructions. The instruction repository may store instructions that when executed by the processor cause the processor to transmit, over the network interface, temporary configuration parameters to a machine-to-machine device in response to an initial attach of the device to the access network, to transmit, over the network interface, a registration request to a machine-to-machine service provider on behalf of the device in response to receipt of a registration request from the device identifying the service provider, and to transmit, over the network interface, permanent access network configuration parameters to the device in response to receipt of a registration response from the service provider, the access network configuration parameters determining in accordance with the received registration response.

Other aspects and features of the present invention will become apparent to those ordinarily skilled in the art upon review of the following description of specific embodiments of the invention in conjunction with the accompanying figures.

### BRIEF DESCRIPTION OF THE DRAWINGS

Embodiments of the present invention will now be described, by way of example only, with reference to the attached Figures, wherein:
Figure 1 is a block diagram illustrating a connectivity scenario;
Figure 2 is a block diagram illustrating a connectivity scenario;
Figure 3 is a block diagram illustrating a connectivity scenario;
Figure 4 is a block diagram illustrating an exemplary node in the networks of Figures 1-3;
Figure 5 is a call flow diagram illustrating an exemplary embodiment of a device being configured after an initial attach to the access network;
Figure 6 is a call flow diagram illustrating an exemplary embodiment of a device using the access network as the M2M Service Provider being configured after an initial attach to the access network;
Figure 7 is a call flow diagram illustrating an exemplary embodiment of a device communicating with an M2M Service Provider on a non-initial connection;
Figure 8 is a call flow diagram illustrating an exemplary embodiment of a device communicating with an M2M Service Provider on a non-initial connection using an M2M NSCL as a proxy;
Figure 9 is a call flow diagram illustrating an exemplary embodiment of a device not having a pre-selected M2M Service Provider being configured after an initial attach to the access network;
Figure 10 is a flow chart illustrating an exemplary method of configuring a machine-to-machine device; and
Figure 11 is a flow chart illustrating an exemplary method of providing configuration information to a machine-to-machine device.

### DETAILED DESCRIPTION

The present invention is directed to a system and method for registering and configuring M2M devices on ANs for interaction with different M2M SPs.

Reference may be made below to specific elements, numbered in accordance with the attached figures. The discussion below should be taken to be exemplary in nature, and not as limiting of the scope of the present invention. The scope of the present invention is defined in the claims, and should not be considered as limited by the implementation details described below, which as one skilled in the art will appreciate, can be modified by replacing elements with equivalent functional elements.

An M2M device connects to an M2M SP over an AN. The selection of the AN used by the M2M device is not germane to this discussion as it is a well understood field, and typically will be performed through either the insertion of a Subscriber Identity Module (or a variation thereof) or through other conventional means. The M2M device may be preconfigured to connect to a particular M2M SP, but when first attaching to the AN, this will likely not be apparent to the AN. The M2M device may not be preconfigured to a particular M2M SP, in which case during an initial attach to the AN, the AN must obtain an identification of the M2M SP to be used. It should be noted that in some scenarios that AN may also provide M2M SP functionality, while in others the AN is merely providing connectivity to the M2M device (the degree of connectivity provided may vary based on the business rules associated with the M2M SP which may complicate the initialization of the M2M device). In the following discussion, architectures in which the M2M SP is the same as the AN, the AN proxies all traffic to the M2M SP during an initial attach, and in which the AN proxies traffic for all communications between the M2M devices and the M2M SP will be discussed. Additionally, initial attach and configuration of an M2M device will be discussed in scenarios in which the M2M device is pre-configured to use a particular M2M SP and in which the M2M device does not have a preconfigured M2M SP.

The following discussion details a process that can be undertaken by an M2M device when it attaches to a cellular access network for the first time. This process can help to ensure that the M2M device acquires the proper and necessary information for M2M service purposes as well as help to ensure that the access network provider and the M2M service provider can enforce the proper subscription profile for the M2M device both at the access and the service level respectively. Furthermore this process can be used to ensure proper interworking between the access network provider and the M2M service provider in support of various connection and interaction models to fulfill various business agreements.

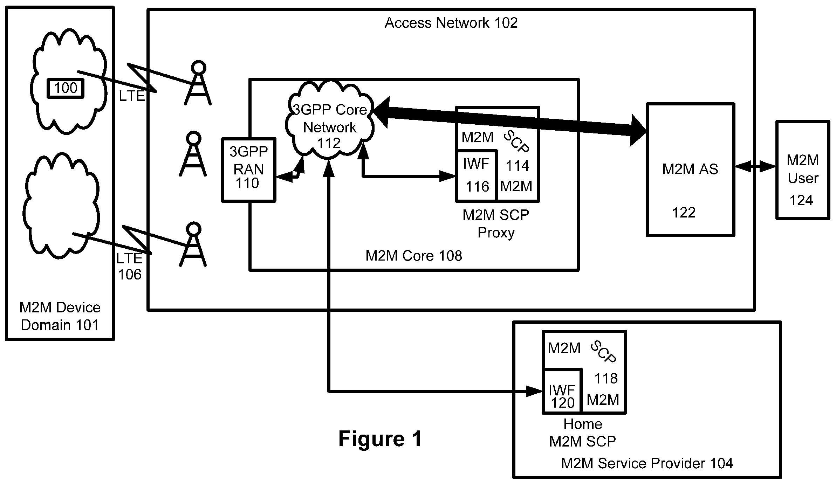

In the first scenario to be discussed, the access network provider will assumed to be the M2M service provider and is illustrated in Figure 1. The bold double arrow indicates M2M traffic between the access network and the applicable M2M NSCL for this scenario.

An M2M Device 100, shown as residing in M2M device domain 101, connects to the AN 102, and if the M2M Device 100 is using an M2M SP that is different than the AN 102, it can connect through the AN 102 to the M2M SP domain 104. The connection to AN 102 is shown here as being a 3GPP compliant radio access connection such as an LTE connection 106. One skilled in the art will appreciate that although reference is made herein to a device, it could be the unique pairing of a device and application that is subject to this configuration process. Furthermore, the device could be a gateway acting on behalf of a plurality of different devices. The M2M core 108 interacts with the M2M device 100 through the use of an interface such as 3GPP RAN interface 110. One skilled in the art will appreciate that this discussion makes use of terminology and elements specific to an access network using a radio air interface and an evolved packet core, however it will be apparent to those skilled in the art that other access networks can be used with the required variations. In one such example, M2M devices can connect through a gateway that makes use of a wired connection, such as that provided by a DOCSIS compliant cable modem, or another such fixed access technology. Those skilled in the art will appreciate that where the AN 102 provides M2M SP functionality, the M2M AS 122 can be accessed through the 3GPP Core Network 112 which directs traffic through the M2M SCP proxy 114 to the M2M AS 122. The 3GPP Core network 112 allows interaction with an M2M Service Provider 104 through its M2M SCP 118 which connects to the 3GPP Core Network through Interworking Function (IWF) 120. The Home M2M SCP 118 provides access to M2M applications and services (not illustrated in this figure).

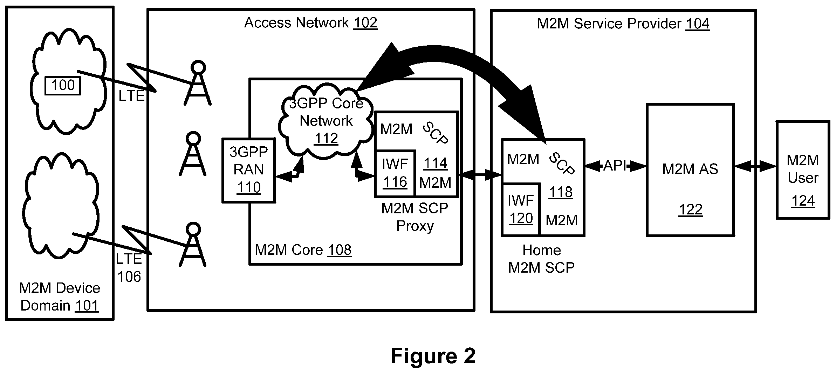

In the second scenario, the access network provider is not the M2M service provider, and no proxy is used. In this scenario, as illustrated in Figure 2, the M2M Service Provider has a business agreement with the Access Network Provider. The M2M Service Provider also interacts with the access network via an IWF, owned by the M2M service provider, which is compliant to the specific access network applicable standard in that regard. The bold double headed arrow indicates the M2M traffic between the access network and the applicable M2M NSCL for this scenario

As shown in Figure 2, an M2M Device 100, in the M2M Device Domain 101 communicates with the M2M Service Provider 104 through the Access Network 102. As illustrated M2M Device connects to Access Network 102 through the use of a radio access network link, such as LTE connection 106. In the M2M core 108, the traffic is first handled by a 3GPP RAN 110, and handed to the 3GPP Core Network 112. During the initial attach of a device 100, the M2M SCP Proxy 114, with IWF 116 serves as a proxy for connecting the device to the M2M Service Provider 104. The proxied connection is received by the home M2M SCP 118 and its IWF 120. Through an API, the home M2M SCP 118 provides access to an M2M Application Server 122, which is accessed by M2M user 124. After the initial attach and configuration of the device 100 in AN 102, subsequent communication is routed directly from the 3GPP core network 112 to the home M2M SCP 118 which is marked by the bold arrow.

In the third scenario, the access network provider is not the M2M service provider, but a proxy is used so that traffic from the terminal device is routed in a manner that provides the Access Network Operator control and security, while reducing an implementation burden on the M2M SP.

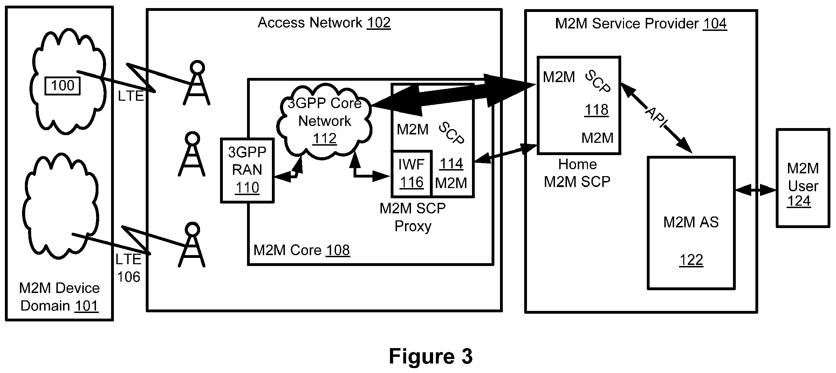

In this case as shown in Figure 3, the M2M SP typically has a business agreement with the Network Access Provider. However, the M2M SP does not interact with the Access Network Provider via an IWF. Rather all M2M traffic to the M2M SP is proxied via the M2M NSCL of the Access Network Provider. This saves the burden for the M2M SP to implement any IWF support. Note that this capability requires support by the Access Network Provider. As illustrated in Figure 3, this architecture is similar to that shown in Figure 2, but instead of a connection between the 3GPP Core Network 112 and the home M2M SCP 118, the traffic is routed through the M2M SCP Proxy 114 to the Home M2M SCP 118. The Home M2M SCP 118, in this embodiment, would not need to implement any IWF support.

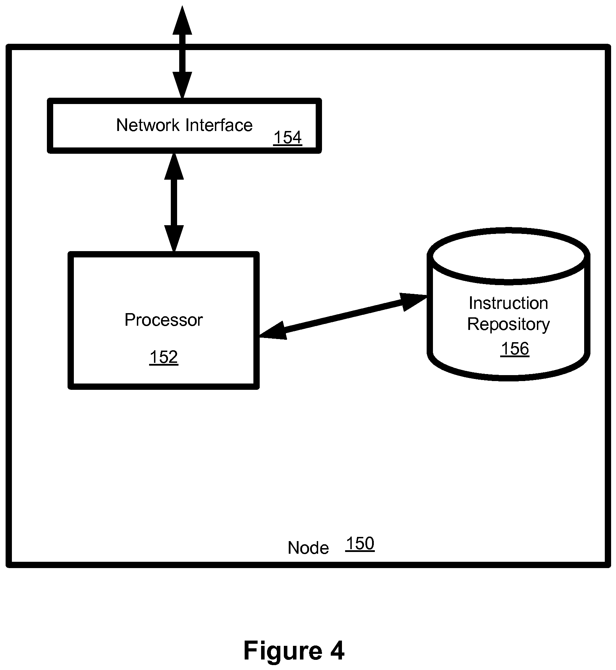

One skilled in the art will appreciate that Figure 4 illustrates a node 150 having a processor 152, a network interface 154 and an instruction repository 156. Such a node 150 can be used to implement the methods of the current invention at various places in the network, including at the Access Network M2M SCP proxy. One skilled in the art will also appreciate that the nodes discussed in the figures can be abstractly viewed as a series of functional elements. Such functional elements can be implemented on a general purpose computer such as that illustrated in Figure 4.

It should be understood that to enable dynamic selection of an M2M SP, the access network provider can act as a broker. This can allow the M2M device to dynamically select an M2M SP with whom the access network has business agreements. The dynamic selection of an M2M SP can then be used by the access network to select from the connectivity scenarios illustrated in Figures 1-3 and discussed above.

Procedures for enablement of M2M services will now be discussed with reference to nodes illustrated in Figures 1-3. Message flow diagrams will be used in conjunction with the following discussion.

In providing a service enablement process, it may be advantageous in certain scenarios to allow an M2M device to acquire at least some of the necessary information to receive a desired service from a desired M2M SP for the scenarios outlined in Figures 1-3. In other exemplary embodiments, it may be advantageous, but not essential, this information be obtained during the initial network attachment process. In other scenarios, the M2M SP may be implemented such that it acquires an M2M external identifier used for interaction between the M2M SP and the access network. This identifier is typically allocated by the Access Network Provider. This can be obtained through the M2M device initially connecting to the M2M NSCL of the access network, or other means. An exemplary manner in which this is done will be discussed below in more detail. This may occur during the initial network attachment of the M2M device. Alternatively, it may be beneficial to enable the access network to enforce the access subscription profile related to an M2M device and to update it appropriately after initial network attachment.

In the following exemplary service enablement processes, the access network is able to distinguish an M2M subscription from other types of access subscriptions. Another feature of a below-illustrated exemplary embodiment is that the M2M device can initially be allowed to establish a bearer to the access network NSCL for bootstrapping purposes. Finally, the M2M device, in some exemplary embodiments, can be pre-provisioned with the M2M Subscription ID allocated to it by the M2M SP before any bearer is established. This M2M subscription ID can then be passed to the access network during the bearer establishment procedure.

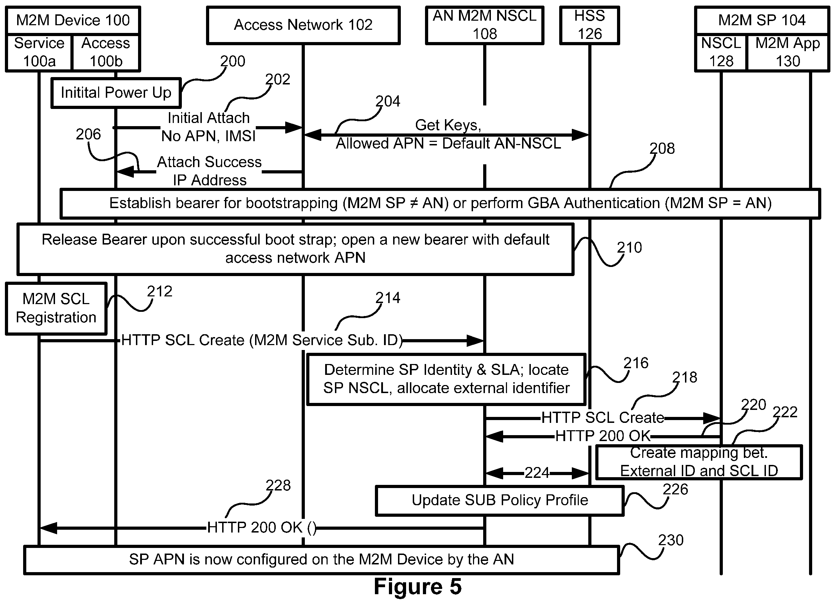

The call flow diagram of Figure 5 illustrates an exemplary method for the interaction processing that occurs during the first attachment of an M2M device to the access network. An M2M Device 100 has a service component 100a and an access component 100b. The M2M device 100 connects to the Access Network 102 which has both an AN Network Service Control Layer (NSCL) 108 and a Home Subscriber Server (HSS) 126. Using AN 102 the M2M Device connects to the M2M SP 104 which has its own NSCL 128 and an M2M Application 130 (which would typically be run on an M2M AS 122).

In the exemplary embodiment of Figure 5, the M2M device 100 powers up in step 200 and attaches to AN 102 for the first time in step 202. During the initial attach, the M2M Device 100 does not provide a default Access Point Name (APN) but does provide an identifier such as its IMSI to AN 102. One skilled in the art will appreciate that other identifiers could also be used, but for the sake of simplicity, the following discussion will only discuss the use of an IMSI. AN 102 initiates device access authentication 204 to the HSS 126 to obtain keys. In this request, a default APN is specified, as illustrated in this exemplary embodiment, the default APN is set to the APN associated with the Access Network NSCL 108 as well as a restricted list of addresses of servers for bootstrapping purposes based on service level agreements (SLA) between the AN 102 and its M2M SP partners. Upon completion of device access authentication 204, the M2M Device 100 is authenticated for network access, and message 206 reporting the attach success and other information such as an Internet Protocol (IP) address is provided. In step 208, the M2M device 100 establishes a bearer with the M2M SP 104 for boot strapping purposes. This bearer is created using the default bearer from the default access subscription profile, and allows the device 100 to obtain the necessary security credentials from its M2M service provider 104. The AN 102 will provide limited connectivity to the M2M device 100 to allow it to acquire the necessary bootstrapping information. Once the bootstrapping process is completed, the M2M device 100 releases the default bearer and can establish a new bearer to communicate with the M2M SP 104 for acquiring the desired service as shown in step 210. One skilled in the art will appreciate that during the initial attach, the M2M device 100 can be provided with a restricted connectivity so that it is only able to establish a bearer to the AN M2M NSCL 108. Such a restriction can be used to allow the Access Network Provider to be able to update the M2M device access profile with the required information for enforcement during subsequent attachment to the access network 102, for interaction between the M2M device 100 and its M2M service provider 104. The M2M device 100 can simply establish a new bearer in step 210 and the access network 102 can ensure that this bearer is targeted to its own M2M NSCL 108. In step 212, the M2M device 100 initiates an M2M SCL registration process. Using message 214, the M2M Device Service Layer 100a sends its M2M Service subscription identifier and other information to the AN NSCL 108. The M2M NSCL 108 can then verify that it has a business relation with the identified M2M SP 104. The identification of the M2M SP 104 can be extracted from the M2M Subscription ID contained in message 214. Upon obtaining the M2M SP identity, a service level agreement (SLA) specific to the M2M SP 104 can be retrieved, and an external identifier can be assigned to the M2M device 100 in step 216. This external identifier, along with the M2M Subscription ID is then transmitted by the AN NSCL 108 to the M2M NSCL 128 in message 218. One skilled in the art will recognize this as the AN NSCL 108 proxying the registration request to the M2M SP NSCL 128 on behalf of M2M Device 100. In step 220, the M2M SP NSCL 128 provides notification of successful registration to the AN NSCL 108, and can then maintain a mapping between the provided external identifier and the SCL id of the M2M device 100 in process 222. Upon successful registration, the access network M2M NSCL 108 can update the M2M device access profile stored by the HSS 126 in step 224, with the necessary access information related to the M2M SP 104. This allows the Access Network Provider to enforce that subsequent attachment by the M2M device 100 is only permitted to the specific M2M SP 104. Once the M2M network access profile is successfully updated in step 226, the M2M NSCL registration outcome can be proxied back to the M2M device 100 as shown by message 228. For subsequent attachment by the M2M device 100, this initial attachment configuration can be bypassed as the necessary information for the configuration of connections from the M2M device 100 is now provisioned in the access profile for the M2M device 100. In addition, the M2M SP 104 will possess the external identifier needed for interworking with the access network 102. In step 230, the necessary access network information (e.g. Access Point Name - APN for 3GPP accesses) that allows the M2M device 100 to establish a bearer with the M2M SP 104 for subsequent network attachment can be configured in the M2M device 100. The details of step 230 are not necessarily germane to the discussion.

It is important to note that the manner in which the connectivity provided to an unconfigured device is implemented, as described above, during the initial attach process is exemplary. The described approach should not be considered limiting. One skilled in the art will appreciate that full access could be given to the device, although a number of business issues would arise as a result. Other approaches can be used to achieve the same effect. For example the M2M device can be provisioned initially with an APN that allows it limited connectivity to a handful of addresses for bootstrapping purposes. These addresses are known to the AN based on SLAs it has with its business M2M SP partners. Once the bootstrapping procedure is completed, any attempt by the M2M device to connect to its M2M SP 104 will reroute the connection to the AN M2M NSCL 108. This approach can be used to obtain a similar outcome with fewer steps.

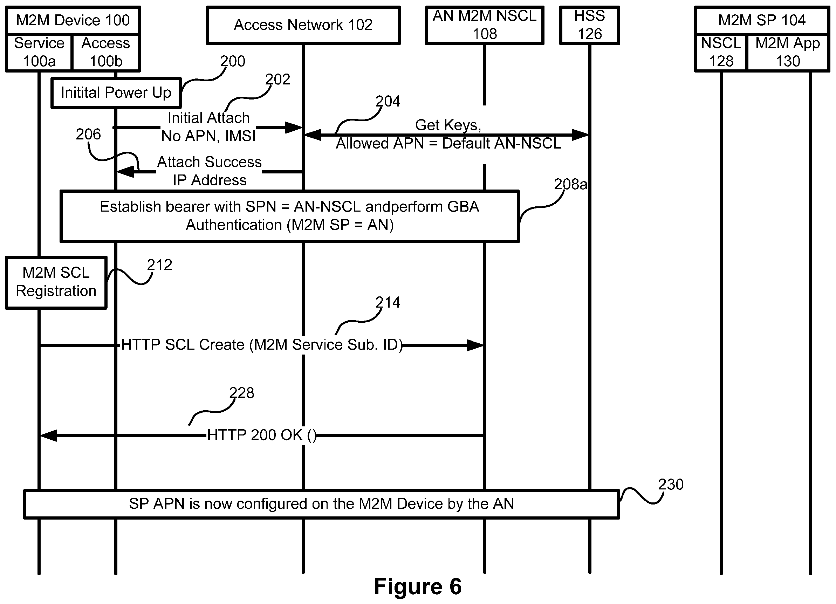

One skilled in the art will appreciate that in step 208, a bearer is established when it is clear that the M2M SP 104 is a distinct entity from AN 102. Where the AN serves as the M2M SP, a generic bootstrap architecture procedure can be employed, as the M2M device 100 does need to perform the bootstrapping procedure. Such a scenario is shown in Figure 6. As illustrated, the M2M Device 100 powers on in step 200 and transmits an attach request to AN 102 in step 202. The AN 102 and the HSS 126 exchange data in step 204, and the attach success is reported to the M2M device 100 in step 206, just as described with respect to Figure 5. In step 208a, a bearer is established with the default network APN that is associated with the AN, and a GBA procedure is performed. In step 212, the M2M SCL registration is started, and message 214 is sent from the M2M Device Service layer 100a to the AN SCL 108. The AN SCL 108 does not need to communicate with an external M2M SP 104, and can thus simply return the registration confirmation in message 228. The process completes in step 230 as described above. It can be seen from the above that the M2M device 100 is initially pre-configured to use GBA or to perform bootstrapping and as such trigger appropriate steps in accordance with either Figure 5 or Figure 6

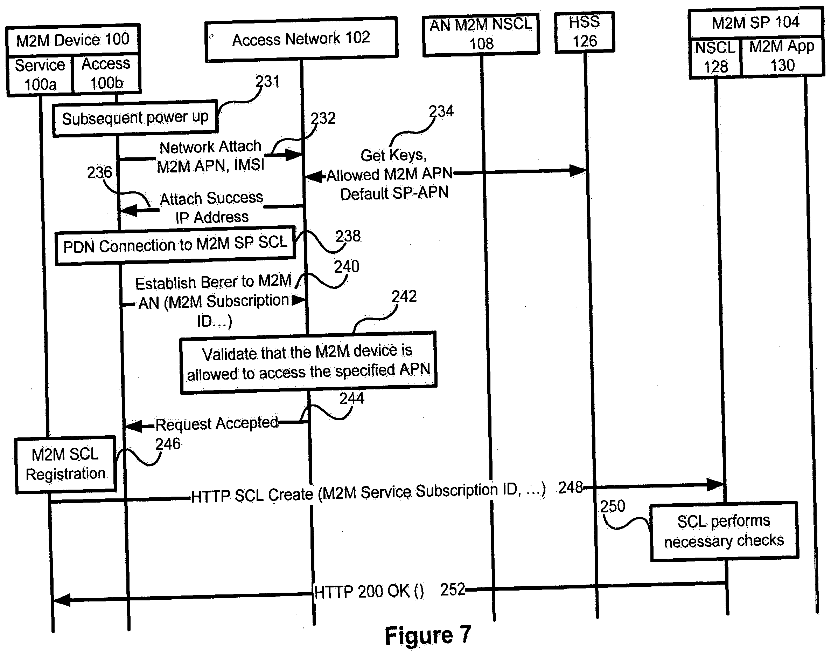

After the initial attach process as described above, the M2M device 100 can re-connect to the network, and the manner in which the data is transmitted from the M2M device 100 to the M2M SP 104 is subject to what arrangements have been made between the M2M SP 104 and the AN operator. Figure 7 illustrates the scenario in which interworking functions are used to allow traffic to proceed from the AN Operator to the M2M SP. This is the scenario illustrated in Figure 2.

The call flow of Figure 7 illustrates exemplary steps that can be undertaken at an M2M device subsequent to attaching to the access network. In step 231, the M2M device is powered up, and initiates an access network connection with a request for a network attach that specifies the M2M APN, configured in the M2M device 100 as an outcome from Figure 5 or Figure 6, and the IMSI, as shown in 232. The identification of the M2M APN is an indication to the AN 102, which receives requests 232, that this is not an initial attach. In bidirectional data flow 234, the AN 102 communicates with HSS 126 to authenticate the M2M device 100. In 234, the AN 102 obtains keys, and sets the allowed M2M APN as the APN allocated to the M2M SP (also referred to as SP-APN), and obtains the access profile stored in the HSS 126 for enforcement purposes. Notification of the successful attach, along with the assigned IP address is provided in step 236. The M2M Device access layer 100a then initiates a PDN connection to the M2M SP NSCL in step 238. To that effect, in step 240, the M2M device 100 establishes the allowed default bearer according to the access subscription profile to allow it to connect to its M2M SP in step 240. In step 242, the AN validates that the M2M device is allowed to access the specified APN and provides an indication of request acceptance in step 244. In step 246, the M2M device service layer 100a begins the M2M SCL registration process 246. In message 248, the M2M Device 100 sends to the M2M SP NSCL 128 an SCL registration request, through an HTTP SCL CREATE, request containing the service subscription ID and other data. In step 250, the M2M SP NSCL 128 performs any necessary checks and then confirms registration in 252. One skilled in the art will appreciate that although it proxied data during the initial attach, the access network operator, in the scenario illustrated in Figure 7, does not proxy data between the M2M device 100 and the M2M SP 104, and is rather completely transparent.

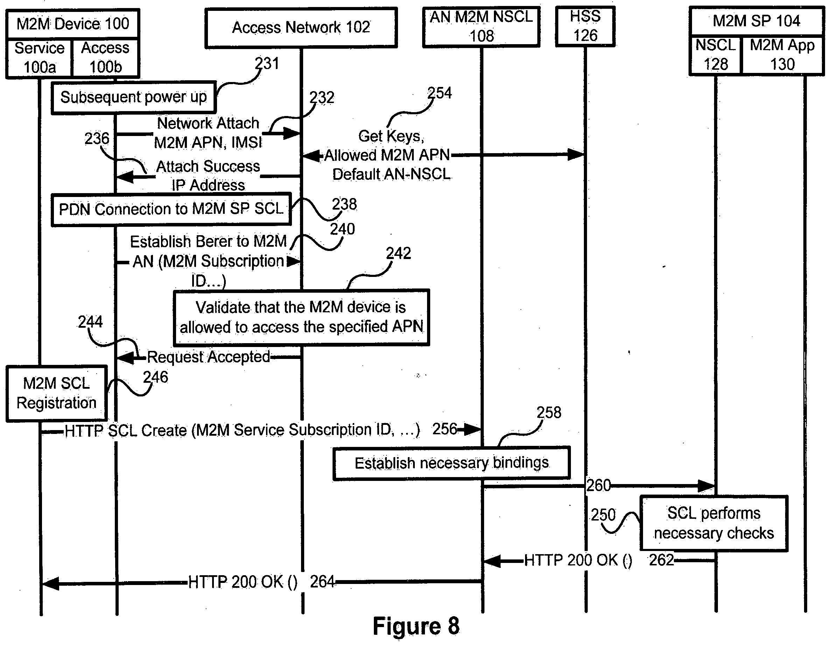

For subsequent network attachment of an M2M device in a proxy connection scenario, Figure 8 illustrates an exemplary call flow that corresponds to a message flow that may occur in the architecture of Figure 3. Steps 231 and 232 are carried out in a similar fashion to that explained above with respect to Figure 7. While in step 234, the APN was set to the SP-APN, in step 254, the M2M APN is set to the default AN-NSCL108. Steps 236, 238, 240, 242, 244 and 246 are carried out as described above. It should be noted that the bearer established in 240 sets the M2M APN to be the AN-NSCL. Following the initiation of the M2M SCL Registration of the M2M device 100 in step 246, the M2M Device Service layer 100a sends an SCL registration request 256, through an HTTP SCL CREATE, request, to the AN NSCL containing the M2M Service subscription identifier and any other required information. In step 258, the AN NSCL 108 will establish the necessary bindings. These bindings are used to associate the M2M device 100 to M2M SP 104 which allows proper functioning of the proxy services. In step 260 the registration request is proxied by the AN NSCL 108 to the M2M SP NSCL 128. The M2M SP NSCL 128 performs necessary checks in step 250 as described above, and confirms registration to the AN NSCL 108 in message 262. The AN NSCL 108 then forwards the confirmation along to the M2M device service layer 100a in message 264.

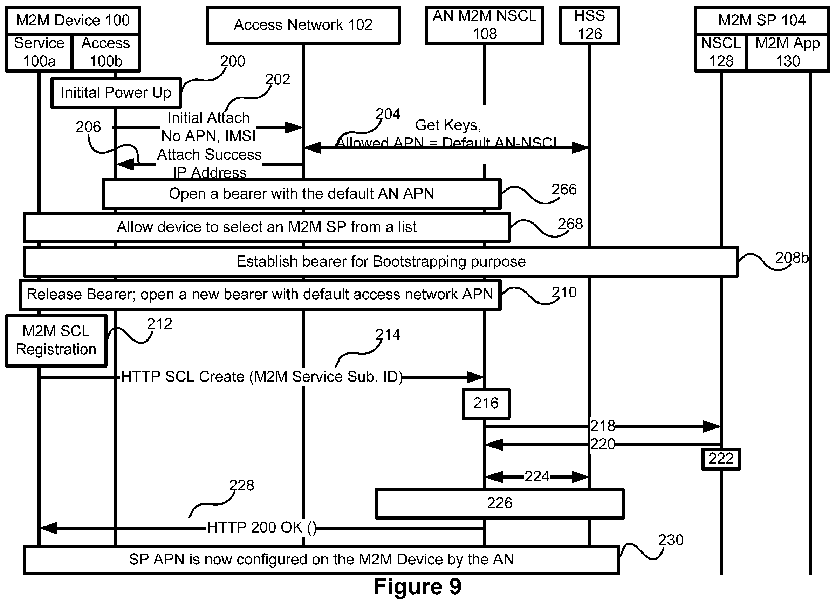

The call flow of Figure 9 shows the interactions that take place when an M2M device attaches for the first time to an access network, but does not have a preselected M2M SP. The AN can provide the M2M device with a list of available M2M SPs so that the M2M device can be configured. This may be referred to as the dynamic selection of an M2M SP broker scenario. As shown in Figure 9, the M2M device 100 is powered on, attaches to the network and is authenticated for network access in steps 200, 202, 204 and 206 as described above with respect to Figure 5. In step 266, the M2M Device access layer 100b establishes a bearer to the AN 102 using the default network access APN (which in this case is the AN NSCL 108). The AN NSCL can then, in step 268 provide the M2M Device Service Layer 100a with a list of available M2M SPs that are accessible through the AN 102, and with whom the AN has business agreements (including itself if it offers M2M services). The preferred M2M SP 104 is selected on the M2M Device 100 (either through a programming choice or through an operator interaction). Upon making the selection the M2M Device is provided the information needed to perform the bootstrapping. If the M2M SP is set to the AN, then the process would proceed to steps 212, 214, 228 and 230 as shown in Figure 6. Where the selected M2M SP is different from the AN, the bearer for bootstrapping purposes is established in step 208b between the M2M Device Service Layer 100a and the M2M SP NSCL 128. From this point, the process continues to steps 210, 212, 214, 216, 218, 220, 222, 224, 226, 228 and 230 as described in Figure 5.

One skilled in the art will appreciate that the subsequent device attachment to the network call flow is effectively identical to that of the subsequent attaches for the cases described above, that one skilled in the art will appreciate how it is implemented. As a result, it will not be discussed in further detail at this time.

One skilled in the art will appreciate that the term "proxied" is used as a verb to indicate that a data is transferred from one node to another through a proxy.

The M2M Subscription identifier preferably identifies the M2M subscription assigned to the M2M device 100, and does so uniquely. The M2M Subscription Identifier may be owned by the M2M service provider 104 and can change if the M2M service provider is changed. The M2M subscription identifier can identify the M2M SP as well.

The subscription ID may be assigned and verified during the attachment process, and can be pre-configured in the device or assigned to a device during the first attach, as part of the bootstrapping process.

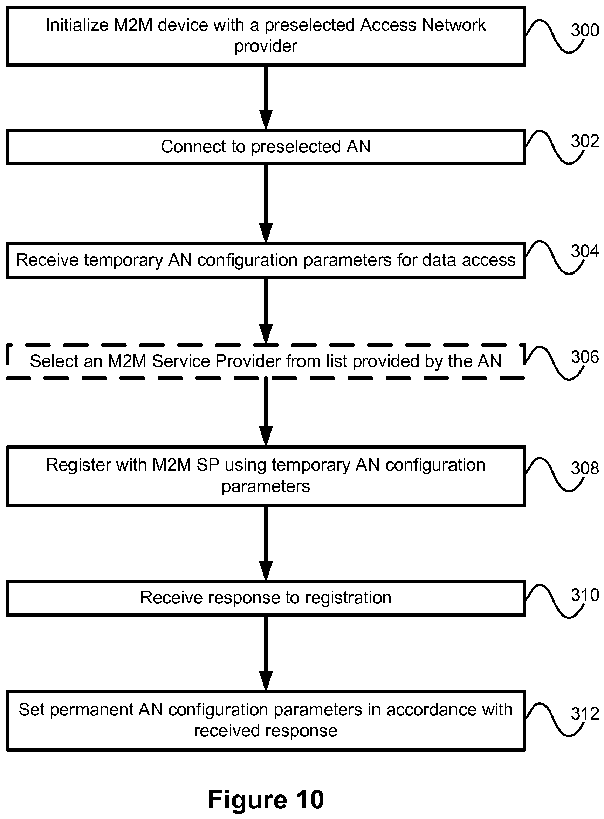

The processes described above will now be discussed from the perspective of the M2M device 100 which connects to AN 102. As shown in Figure 10, an M2M device is initialized with a preselected AN provider as shown in step 300. As noted above, the selection of an AN provider is typically done through the insertion of a Subscriber Identity Module, or its equivalent, or through an on-device configuration option. In step 302, the M2M device connects to the preselected AN, and in response it receives, in step 304, a set of temporary configuration parameters for data access. If the device does not already have a selected M2M Service Provider, it can optionally be provided a list and in optional step 306 selects the M2M Service Provider from the list. In step 308, the M2M Device registers with the M2M SP, either the one selected in step 306 or one pre-selected and preprogrammed prior to initialization, using the temporary AN configuration parameters. One skilled in the art will appreciate that from the perspective of the device, this is an M2M SP registration, and the device may not necessarily be aware that the AN is proxying any requests on its behalf. In step 310, a response to the registration is received. The response to the registration is then used in step 312 to set permanent AN configuration parameters. It should be apparent to those skilled in the art that a single M2M SP may have different arrangements with different AN operators, and the above described method allows individual devices to be configured for the different arrangements as needed.

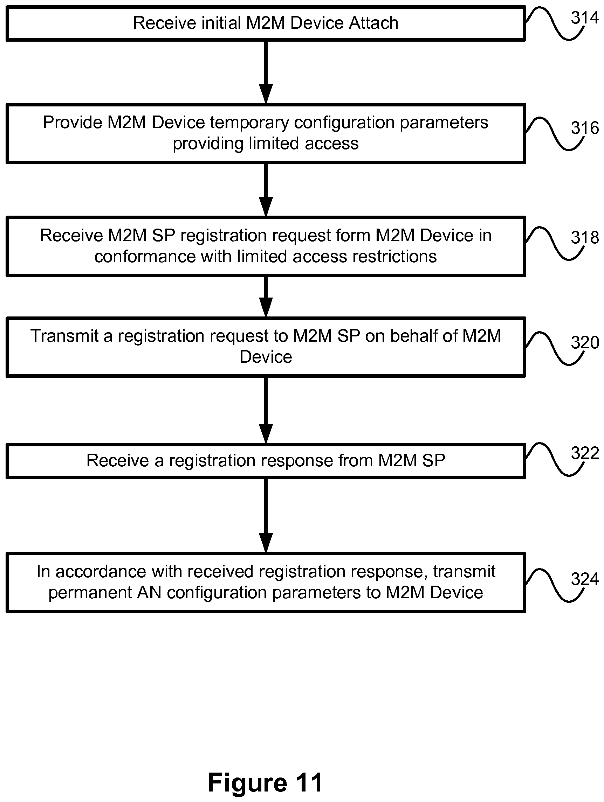

Figure 11 illustrates a method from the perspective of a node in the AN that coincides with the method of Figure 10. In step 314, an initial M2M device attach is received. Responsive to the received initial device attach, a set of temporary configuration parameters are transmitted to the M2M device in step 316. The temporary configuration parameters are established to restrict the access provided to the M2M Device prior to its permanent configuration. In step 318, an M2M SP registration request is received from the M2M device. This registration request is received in accordance with the limited access restrictions created by the temporary configuration parameters. A registration request is then sent to the M2M SP on behalf of the M2M device in step 320. This registration request is based on the received registration request, but may be modified by the AN as appropriate. In step 322, a registration response is received from the M2M SP. This registration response will include information that specifies billing details and approved access rights, as well as the manner in which the M2M device can access the M2M SP. Based on this information in the registration response, a permanent set of AN configuration parameters is determined and is transmitted to the M2M Device in step 324. Those skilled in the art will appreciate that, as shown in the earlier call flow diagrams, the AN can set its own configuration parameters based on the interaction with the M2M SP as well, but from the perspective of the interaction between the M2M device and the AN, this is not necessary.

Embodiments of the invention may be represented as a software product stored in a machine-readable medium (also referred to as a computer-readable medium, a processor-readable medium, or a computer usable medium having a computer readable program code embodied therein). The machine-readable medium may be any suitable tangible medium including a magnetic, optical, or electrical storage medium including a diskette, compact disk read only memory (CD-ROM), digital versatile disc read only memory (DVD-ROM) memory device (volatile or non-volatile), or similar storage mechanism. The machine-readable medium may contain various sets of instructions, code sequences, configuration information, or other data, which, when executed, cause a processor to perform steps in a method according to an embodiment of the invention. Those of ordinary skill in the art will appreciate that other instructions and operations necessary to implement the described invention may also be stored on the machine-readable medium. Software running from the machine-readable medium may interface with circuitry to perform the described tasks.

The above-described embodiments of the present invention are intended to be examples only. Alterations, modifications and variations may be effected to the particular embodiments by those of skill in the art without departing from the scope of the invention, which is defined solely by the claims appended hereto.

## Claims

1. A method for obtaining network configuration parameters at a machine-to-machine, M2M, device (100), the method comprising:
- connecting (302) to an access network (102);
- receiving (304), from the access network, temporary access network configuration parameters in response to the connection;
- registering (308) with an M2M service provider (104) over the access network using the received temporary access network configuration parameters;
- receiving (310), from the M2M service provider, a response to the registration with the M2M service provider; and
- setting (312) permanent access network configuration parameters in accordance with the received response.

2. The method of claim 1 further comprising the step of selecting (306) the M2M service provider from a list provided by the access network prior to the step of registering.

3. The method of claim 1 wherein the access network is a radio access network.

4. The method of claim 1 wherein the temporary access network configuration parameters include an access point name, APN, specifying a node in the access network.

5. The method of claim 4 wherein:
the permanent access network configuration parameters include an APN specifying a node associated with the service provider; or
the permanent access network configuration parameters include an APN specifying a node in the access network.

6. A machine-to-machine, M2M, device (100) comprising:
- a network interface (154) configured to communicate with an access network (102);
- a processor (152) configured to execute instructions; and
- an instruction repository (156) configured to store instructions that when executed by the processor cause the processor to:
-- initiate a connection to the access network over the network interface,
-- register with an M2M service provider through the access network using temporary access network configuration parameters received, from the access network, in response to the initiated connection, and
-- set permanent access network configuration parameters in accordance with a registration response received, from the M2M service provider, in response to the registration with the M2M service provider.

7. A method of configuring an M2M device (100) for use of an access network (102) at an access network machine-to-machine, M2M, network service control layer entity, the method comprising:
- receiving (314) an initial attach from the device;
- transmitting (316) temporary configuration parameters to the device;
- receiving (318) a registration request from the device for service with an M2M service provider (104);
- transmitting (320) a registration request to the service provider on behalf of the device;
- receiving (322) a registration response from the service provider; and
- transmitting (324) permanent access network configuration parameters, determined in accordance with the received registration response, to the device.

8. The method of claim 7 wherein the temporary configuration parameters are selected to provide limited access to network resources.

9. The method of claim 8 wherein the limited access provides the device with proxied access to the service provider through a node in the access network.

10. The method of claim 7 further including the step of receiving, from the device, an explicit selection of the M2M service provider in response to transmitting a list of available M2M service providers to the device.

11. The method of claim 7 wherein the registration request transmitted to the service provider is generated in accordance with the received registration request.

12. The method of claim 7 wherein the temporary access network configuration parameters include an access point name, APN, specifying a node in the access network.

13. The method of claim 12 wherein:
the permanent access network configuration parameters include an APN specifying a node associated with the service provider; or
the permanent access network configuration parameters include an APN specifying a node in the access network.

14. An access network machine-to-machine, M2M, network service control layer entity (108) comprising:
- a network interface (154) configured to communicate with devices (100) and service providers (104) connected to an access network (102);
- a processor (152) configured to execute instructions; and
- an instruction repository (156) configured to store instructions that when executed by the processor cause the processor to:
-- transmit, over the network interface, temporary configuration parameters to an M2M device in response to receipt of an initial attach of the device to the access network,
-- transmit, over the network interface, a registration request to an M2M service provider on behalf of the device in response to receipt of a registration request from the device identifying the service provider, and
-- transmit, over the network interface, permanent access network configuration parameters to the device in response to receipt of a registration response from the service provider, the permanent access network configuration parameters determined in accordance with the received registration response.

15. A machine-readable medium, comprising sets of instructions, code sequences, configuration information, or other data, which, when executed, cause a processor to perform all steps in a method according to any one of claims 1 to 5, or 7 to 13.

## Patentansprüche

1. Verfahren zum Erlangen von Netzwerkkonfigurationsparametern in einer Maschine-zu-Maschine-, M2M-, Vorrichtung (100), wobei das Verfahren umfasst:
- Verbinden (302) mit einem Zugangsnetzwerk (102);
- Empfangen (304), von dem Zugangsnetzwerk, von temporären Zugangsnetzwerkkonfigurationsparametern in Antwort auf die Verbindung;
- Registrieren (308) bei einem M2M-Dienstbereitsteller (104) über das Zugangsnetzwerk unter Verwendung der empfangenen temporären Zugangsnetzwerkkonfigurationsparameter;
- Empfangen (310), von dem M2M-Dienstbereitsteller, einer Antwort auf die Registrierung bei dem M2M-Dienstbereitsteller; und
- Einstellen (312) permanenter Zugangsnetzwerkkonfigurationsparameter gemäß der empfangenen Antwort.

2. Verfahren gemäß Anspruch 1, weiterhin umfassend den Schritt des Auswählens (306) des M2M-Dienstbereitstellers aus einer Liste, die durch das Zugangsnetzwerk bereitgestellt wird, vor dem Schritt des Registrierens.

3. Verfahren gemäß Anspruch 1, wobei das Zugangsnetzwerk ein Funkzugangsnetzwerk ist.

4. Verfahren gemäß Anspruch 1, wobei die temporären Zugangsnetzwerkkonfigurationsparameter einen Zugangspunktnamen, APN, umfassen, der einen Knoten in dem Zugangsnetzwerk spezifiziert.

5. Verfahren gemäß Anspruch 4, wobei:
die permanenten Zugangsnetzwerkkonfigurationsparameter einen APN umfassen, der einen Knoten spezifiziert, der mit dem Dienstbereitsteller assoziiert ist; oder
die permanenten Zugangsnetzwerkkonfigurationsparameter einen APN umfassen, der einen Knoten in dem Zugangsnetzwerk spezifiziert.

6. Maschine-zu-Maschine-, M2M-, Vorrichtung (100), umfassend:
- eine Netzwerkschnittstelle (154), die konfiguriert ist, um mit einem Zugangsnetzwerk (102) zu kommunizieren;
- einen Prozessor (152), der konfiguriert ist, um Anweisungen auszuführen; und
- einen Anweisungsspeicher (156), der konfiguriert ist, um Anweisungen zu speichern, die bei Ausführung durch den Prozessor den Prozessor veranlassen, um:
-- eine Verbindung zu dem Zugangsnetzwerk über die Netzwerkschnittstelle zu initiieren,
-- bei einem M2M-Dienstbereitsteller durch das Zugangsnetzwerk unter Verwendung temporärer Zugangsnetzwerkkonfigurationsparameter zu registrieren, die von dem Zugangsnetzwerk in Antwort auf die initiierte Verbindung empfangen wurden, und
-- permanente Zugangsnetzwerkkonfigurationsparameter gemäß einer Registrierungsantwort einzustellen, die von dem M2M-Dienstbereitsteller in Antwort auf die Registrierung bei dem M2M-Dienstbereitsteller empfangen wurde.

7. Verfahren zum Konfigurieren einer M2M-Vorrichtung (100) zur Verwendung eines Zugangsnetzwerks (102) bei einer Zugangsnetzwerk-Maschine-zu-Maschine-, M2M-, Netzwerkdienststeuerschichtfunktionseinheit, wobei das Verfahren umfasst:
- Empfangen (314) einer initialen Verbindungsaufforderung von der Vorrichtung;
- Senden (316) temporärer Konfigurationsparameter zu der Vorrichtung;
- Empfangen (318) einer Registrierungsanforderung von der Vorrichtung für einen Dienst bei einem M2M-Dienstbereitsteller (104);
- Senden (320) einer Registrierungsanforderung zu dem Dienstbereitsteller im Namen der Vorrichtung;
- Empfangen (322) einer Registrierungsantwort von dem Dienstbereitsteller; und
- Senden (324) permanenter Zugangsnetzwerkkonfigurationsparameter, die gemäß der empfangenen Registrierungsantwort bestimmt wurden, zu der Vorrichtung.

8. Verfahren gemäß Anspruch 7, wobei die temporären Konfigurationsparameter ausgewählt werden, um begrenzten Zugang auf Netzwerkressourcen bereitzustellen.

9. Verfahren gemäß Anspruch 8, wobei der begrenzte Zugang die Vorrichtung mit einem Proxy-basierten Zugang zum Dienstbereitsteller durch einen Knoten in dem Zugangsnetzwerk versieht.

10. Verfahren gemäß Anspruch 7, weiterhin umfassend den Schritt des Empfangens, von der Vorrichtung, einer expliziten Auswahl des M2M-Dienstbereitstellers in Antwort auf das Senden einer Liste verfügbarer M2M-Dienstbereitsteller zu der Vorrichtung.

11. Verfahren gemäß Anspruch 7, wobei die Registrierungsanforderung, die zu dem Bereitsteller gesendet wird, gemäß der empfangenen Registrierungsanforderung erzeugt wird.

12. Verfahren gemäß Anspruch 7, wobei die temporären Zugangsnetzwerkkonfigurationsparameter einen Zugangspunktnamen, APN, umfassen, der einen Knoten in dem Zugangsnetzwerk spezifiziert.

13. Verfahren gemäß Anspruch 12, wobei:
die permanenten Zugangsnetzwerkkonfigurationsparameter einen APN umfassen, der einen Knoten spezifiziert, der mit dem Dienstbereitsteller assoziiert ist; oder
die permanenten Zugangsnetzwerkkonfigurationsparameter einen APN umfassen, der einen Knoten in dem Zugangsnetzwerk spezifiziert.

14. Zugangsnetzwerk-Maschine-zu-Maschine-, M2M-, Netzwerkdienststeuerschichtfunktionseinheit (108), umfassend:
- eine Netzwerkschnittstelle (154), die konfiguriert ist, um mit Vorrichtungen (100) und Dienstbereitstellern (104) zu kommunizieren, die mit einem Zugangsnetzwerk (102) verbunden sind;
- einen Prozessor (152), der konfiguriert ist, um Anweisungen auszuführen; und
- einen Anweisungsspeicher (156), der konfiguriert ist, um Anweisungen zu speichern, die bei Ausführung durch den Prozessor den Prozessor veranlassen, um:
-- über die Netzwerkschnittstelle temporäre Konfigurationsparameter zu einer M2M-Vorrichtung in Antwort auf einen Empfang einer initialen Verbindungsaufforderung der Vorrichtung an das Zugangsnetzwerk zu senden,
-- über die Netzwerkschnittstelle eine Registrierungsanforderung zu einem M2M-Dienstbereitsteller im Namen der Vorrichtung in Antwort auf einen Empfang einer Registrierungsanforderung von der Vorrichtung zu senden, die den Dienstbereitsteller identifiziert, und
-- über die Netzwerkschnittstelle permanente Netzwerkzugangskonfigurationsparameter zu der Vorrichtung in Antwort auf den Empfang einer Registrierungsantwort von dem Dienstbereitsteller zu senden, wobei die permanenten Zugangsnetzwerkkonfigurationsparameter gemäß der empfangenen Registrierungsantwort bestimmt wurden.

15. Maschinenlesbares Medium, das Anweisungssätze, Codesequenzen, Konfigurationsinformationen oder andere Daten umfasst, die bei Ausführung einen Prozessor veranlassen, alle Schritte in einem Verfahren gemäß einem der Ansprüche 1 bis 5 oder 7 bis 13 durchzuführen.

## Revendications

1. Procédé d'obtention de paramètres de configuration réseau à un dispositif machine à machine, M2M, (100), le procédé comprenant de :
- se connecter (302) à un réseau d'accès (102) ;
- recevoir (304), en provenance du réseau d'accès, des paramètres de configuration de réseau d'accès provisoires en réponse à la connexion ;
- s'enregistrer (308) auprès d'un fournisseur de services M2M (104) via le réseau d'accès en utilisant les paramètres de configuration de réseau d'accès provisoires reçus ;
- recevoir (310), en provenance du fournisseur de services M2M, une réponse à l'enregistrement auprès du fournisseur de services M2M ; et
- régler (312) des paramètres de configuration de réseau d'accès permanents en fonction de la réponse reçue.

2. Procédé selon la revendication 1, comprenant en outre l'étape de sélectionner (306) le fournisseur de services M2M dans une liste fournie par le réseau d'accès avant l'étape de l'enregistrement.

3. Procédé selon la revendication 1, dans lequel le réseau d'accès est un réseau d'accès radio.

4. Procédé selon la revendication 1, dans lequel les paramètres de configuration de réseau d'accès provisoires comprennent un nom de point d'accès, APN, spécifiant un noeud dans le réseau d'accès.

5. Procédé selon la revendication 4, dans lequel :
les paramètres de configuration de réseau d'accès permanents comprennent un APN spécifiant un noeud associé au fournisseur de services ; ou
les paramètres de configuration de réseau d'accès permanents comprennent un APN spécifiant un noeud dans le réseau d'accès.

6. Dispositif machine à machine, M2M, (100) comprenant :
- une interface réseau (154) configurée pour communiquer avec un réseau d'accès (102) ;
- un processeur (152) configuré pour exécuter des instructions ; et
- un répertoire d'instructions (156) configuré pour mémoriser des instructions qui, lorsqu'elles sont exécutées par le processeur, amènent le processeur à :
-- initier une connexion vers le réseau d'accès via l'interface réseau,
-- s'enregistrer auprès d'un fournisseur de services M2M par l'intermédiaire du réseau d'accès en utilisant des paramètres de configuration de réseau d'accès provisoires reçus, en provenance du réseau d'accès, en réponse à la connexion initiée, et
-- régler des paramètres de configuration de réseau d'accès permanents en fonction d'une réponse d'enregistrement reçue, en provenance du fournisseur de services M2M, en réponse à l'enregistrement auprès du fournisseur de services M2M.

7. Procédé de configuration d'un dispositif M2M (100) pour l'utilisation d'un réseau d'accès (102) à une entité de couche de contrôle de services de réseau machine à machine, M2M, de réseau d'accès, le procédé comprenant de :
- recevoir (314) un attachement initial en provenance du dispositif ;
- transmettre (316) des paramètres de configuration provisoires au dispositif ;
- recevoir (318) une demande d'enregistrement en provenance du dispositif pour un service auprès d'un fournisseur de services M2M (104) ;
- transmettre (320) une demande d'enregistrement au fournisseur de services pour le compte du dispositif ;
- recevoir (322) une réponse d'enregistrement en provenance du fournisseur de services ; et
- transmettre (324) des paramètres de configuration de réseau d'accès permanents, déterminés en fonction de la réponse d'enregistrement reçue, au dispositif.

8. Procédé selon la revendication 7, dans lequel les paramètres de configuration provisoires sont sélectionnés pour fournir un accès limité à des ressources réseau.

9. Procédé selon la revendication 8, dans lequel l'accès limité fournit au dispositif un accès par procuration au fournisseur de services par l'intermédiaire d'un noeud dans le réseau d'accès.

10. Procédé selon la revendication 7, comprenant en outre l'étape de recevoir, en provenance du dispositif, une sélection explicite du fournisseur de services M2M en réponse à la transmission d'une liste de fournisseurs de services M2M disponibles au dispositif.

11. Procédé selon la revendication 7, dans lequel la demande d'enregistrement transmise au fournisseur de services est générée en fonction de la demande d'enregistrement reçue.

12. Procédé selon la revendication 7, dans lequel les paramètres de configuration de réseau d'accès provisoires comprennent un nom de point d'accès, APN, spécifiant un noeud dans le réseau d'accès.

13. Procédé selon la revendication 12, dans lequel :
les paramètres de configuration de réseau d'accès permanents comprennent un APN spécifiant un noeud associé au fournisseur de services ; ou
les paramètres de configuration de réseau d'accès permanents comprennent un APN spécifiant un noeud dans le réseau d'accès.

14. Entité de couche de contrôle de services de réseau machine à machine, M2M, de réseau d'accès (108) comprenant :
- une interface réseau (154) configurée pour communiquer avec des dispositifs (100) et des fournisseurs de service (104) connectés à un réseau d'accès (102) ;
- un processeur (152) configuré pour exécuter des instructions ; et
- un répertoire d'instructions (156) configuré pour mémoriser des instructions qui, lorsqu'elles sont exécutées par le processeur, amènent le processeur à
-- transmettre, via l'interface réseau, des paramètres de configuration provisoires à un dispositif M2M en réponse à la réception d'un attachement initial du dispositif au réseau d'accès,
-- transmettre, via l'interface réseau, une demande d'enregistrement à un fournisseur de services M2M pour le compte du dispositif en réponse à la réception d'une demande d'enregistrement en provenance du dispositif identifiant le fournisseur de services, et
-- transmettre, via l'interface réseau, des paramètres de configuration de réseau d'accès permanents au dispositif en réponse à la réception d'une réponse d'enregistrement en provenance du fournisseur de services, les paramètres de configuration de réseau d'accès permanents étant déterminés en fonction de la réponse d'enregistrement reçue.

15. Support lisible par machine, comprenant des ensembles d'instructions, des séquences de code, des informations de configuration ou d'autres données qui, lorsqu'ils sont exécutés, amènent un processeur à effectuer toutes les étapes d'un procédé selon l'une quelconque des revendications 1 à 5 ou 7 à 13.
